# EUROPEAN PATENT SPECIFICATION

(11) **EP 2 585 310 B1**
(45) Date of publication and mention of the grant of the patent: **04.04.2018**
(21) Application number: 11730251.3
(22) Date of filing: 23.06.2011
(51) Int. Cl.: B42D 15/00, B32B 38/00

(54) **A SECURITY DOCUMENT AND A MANUFACTURING METHOD**
SICHERHEITSDOKUMENT UND HERSTELLUNGSVERFAHREN DAFÜR
DOCUMENT SÉCURISÉ ET UN PROCÉDÉ DE FABRICATION

(30) Priority: 24.06.2010 EP 10167151
(43) Date of publication of application: 01.05.2013
(73) Proprietor: Gemalto SA, 92190 Meudon (FR)
(72) Inventor: SYRJANEN, Taru, F-92190 Meudon (FR)
(74) Representative: Cassagne, Philippe M.J.
(86) International application number: PCT/EP2011/060581
(87) International publication number: WO 2011/161221

(56) References cited:
- EP-A2- 0 864 997
- WO-A1-01/85451
- WO-A1-2006/077339
- WO-A2-2005/024699
- DE-A1-102008 014 687
- US-A1- 2004 026 518
- US-A1- 2004 066 441
- US-A1- 2008 314 526
- US-A1- 2009 004 467

## Description

### BACKGROUND OF THE INVENTION

### FIELD OF THE INVENTION

This invention relates to a security document such as an identity card or drivers license, for instance.

### DESCRIPTION OF PRIOR ART

Previously there are known security documents comprising an electronic module. The electronic module is embedded into the material of the security document, in many cases in such a way that it can not be visually detected from a surface of the security document.

A problem with the above described prior art solution is that the material of the security document may crack in an area close to the electronic module. Such cracking is caused by internal stress in the material of the security document. Documents US-A-2009/004467, WO-A-2001/085451 and DE-A-10 2008 014687 expose such a phenomenon of cracking.

One reason for internal stress is that the material of the security document and the material of the electronic module have different thermal expansion coefficients, in other words, the amount of expansion and shrinkage is different when temperature changes occur.

### SUMMARY OF THE INVENTION

An object of the present invention is to solve the above mentioned drawback and to provide a security document which has improved properties in order to avoid cracking. This object is achieved with a security document according to independent claim 1 and a method of manufacturing according to independent claim 5.

The possibility of utilizing at least a first separation layer slightly bigger than the hole with the electronic module to prevent layers on opposite sides of the separation layer from attaching to each other at least above or below the electronic module, results in a security document with improved properties. In this way a zone is created at least above or below the electronic module where the layers of the security document are not rigidly attached to each other. In this way internal stress and cracking can be avoided.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates a first embodiment of a security document, and
Figures 2a to 2c illustrate a first embodiment for manufacturing a security document.

### DESCRIPTION OF AT LEAST ONE EMBODIMENT

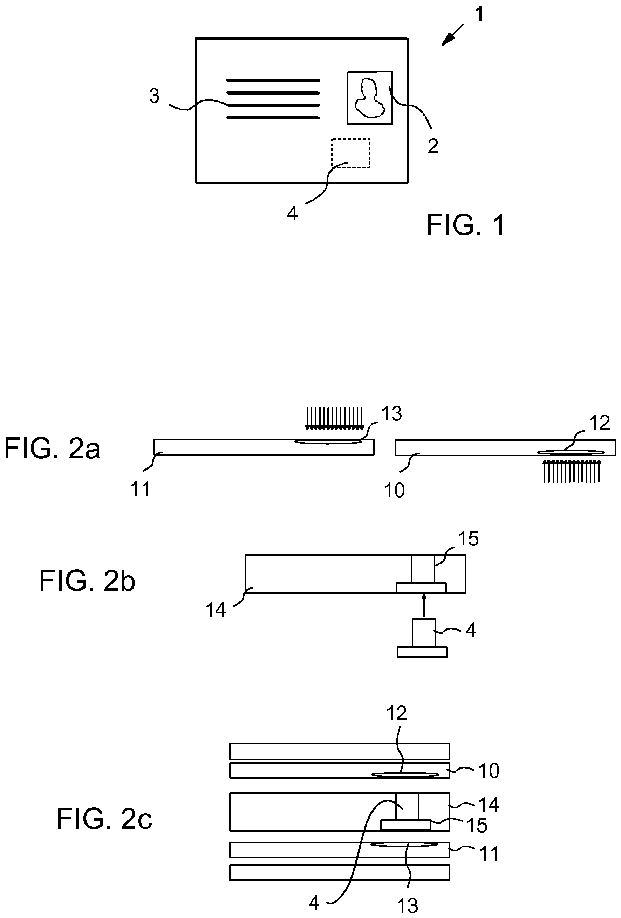

Figure 1 illustrates a first embodiment of a security document 1. The document of Figure 1 may be a identity card, a drivers license or an information page for a passport, for instance.

The security document may be provided with a photograph 2 of the holder and written data 3 with information about the holder, for instance. In addition, the security document may contain a plurality of security elements in order to make forgery of the security document as difficult as possible.

The security document 1 is additionally provided with an electronic module 4, which may be embedded into the plastic material of the security document 1, for instance. Typically the material of the security document is colored, in which case the electronic module is not visible from any side of the security document (though in some cases it might be possible to locate the module as a darker area compared to the surroundings when the security document is held up against a strong light source).

The security module may consist of one or more microcircuits for instance, and also an antenna coil may be embedded into the material of the security document in order to facilitate contactless communication between the electronic module 4 and an external apparatus.

Figures 2a to 2c illustrate a first embodiment for manufacturing a security document. The security document of Figure 1 may be manufactured according to this method. In the illustrated example it is by way of example assumed that separation layers are arranged both above and below the electronic module, though this is not necessary in all embodiments.

In Figure 2a a first layer 10 and a second layer 11 are provided. An area of the first layer 10 is covered by printing ink by printing in order to form a first separation layer 12. Similarly, an area of the second layer 11 is covered by printing ink by printing in order to form a second separation layer 13.

In Figure 2b a third layer 14 is provided. The third layer 14 has a hole 15 through it. An electronic module 4 is arranged into this hole.

The material of the first layer, second layer and third layer may be any suitable material for producing a security document. Typically plastic materials are utilized. One alternative is to produce all of these three layers of Polycarbonate, for instance. Possible additional layers may also be of Polycarbonate, or of alternative materials suitable for use in connection with Polycarbonate.

In Figure 2c the third layer 14 with the electronic module 4 is arranged between the first layer 10 and the second layer 11. From Figure 2c it can be seen that the first separation layer 12 is slightly bigger that the hole such that the first separation layer 12 prevents the first layer 10 and the third layer 14 from attaching to each other (in a subsequent step) at the location of the hole 15 with the electronic module 4 and at the edges of the hole. Similarly, from Figure 2c it can be seen that the second separation layer 13 is slightly bigger that the hole 15 such that the second separation layer 13 prevents the second layer 11 and the third layer 14 from attaching to each other (in a subsequent step) at the location of the hole 15 and at the edges of the hole.

Once brought into the position as illustrated in Figure 2c, the layers 10, 11 and 14, and possibly additional layers which are not necessary but may be included as illustrated by way of example, are attached to each other. The attachment may be carried out by lamination, for instance, whereby the layers are pressed towards each other in a raised temperature. The first separation layer 12 and the second separation layer 13 prevent attachment above and under the electronic module 4, which results in a more reliable and durable security document. The separation layers may be used between other layers than those illustrated in Figure 2c by way of example.

In the previous explanation it has, by way of example, been assumed that the first and second separation layers 12 and 13 are provided on the first and second layers 10 and 11. However, one possibility is also to provide the first and second separation layers on opposite sides of the third layer 14 to cover the hole 15 and the electronic module 4.

Above it has also, by way of example, been assumed that the first and second separation layers are provided specifically by printing with printing ink. However, other alternatives exist both regarding the way to provide the separation layers and the material of the separation layers. Offset printing with an UV (Ultra Violet) curable printing ink, in other words a similar printing ink that is commonly used for coloring or printing various areas of prior art security cards has, however, turned out to be one advantageous alternative to provide the first and second separation layers. In this way separation layers with a thickness about 2 - 5 µm can easily and reliably be produced in exactly the correct position. In a security document where the thickness of the third layer 14 is about 350 - 400 µm such separation layers are thin enough not to change the shape of upper or lower surface of the security document at the location of the electronic module. Therefore it is not necessary to make any gaps or cavities (matching the size of the separation layers) for the separation layers in any one of the first, second or third layers. This results in a simple production process.

Naturally similar advantages are obtained also with other printable materials, as long as the material of the separation layers is capable of preventing rigid attachment of the first, second and third layers at the location of the hole and the edges of the hole. Therefore it is possible to use also other compounds than printing ink only, such as printing ink where some additional compounds have been added.

## Claims

1. A security document (1), comprising:
at least a first layer (10), a second layer (11) and a third layer (14) attached to each other, at least one of said layers comprising a hole (15) through it, and
an electronic module (4) arranged in said hole (15), **characterized in that**
a first separation layer (12) slightly bigger than the hole (15) is arranged between two of said layers (10, 11, 14) at the location of said hole (15) with the electronic module (4) to prevent attachment of said two layers at least above or below the electronic module (4).

2. A security document according to claim 1, **characterized in that**
said first separation layer (12) is located above said electronic module (4), and
a second separation layer (13) slightly bigger than the hole (15) is arranged between two layers (10, 11, 14) at the location of said hole (15) with said electronic module to prevent attachment of said layers below said electronic module (4).

3. A security document according to claim 1 or 2, **characterized in that** at least said first or second separation layer (12, 13) is a layer of a printable ink.

4. A security document according to one of claims 1 or 3, **characterized in that** said first, second and third layer (10, 11, 14) are made of polycarbonate.

5. A method of manufacturing a security document (1), comprising at least:
providing a first layer (10), a second layer (11) and a third layer (14), one of said layers (10, 11, 14) having a hole (15) through it,
arranging an electronic module (4) in said hole (15),
attaching said first layer (11), said second layer (12) and said third layer (14) to each other,
**characterized in that** prior to attaching said layers (10, 11, 14) to each other said method comprises:
providing a first separation layer (12), slightly bigger than the hole (15), between two of said layers (10, 11, 14) at the location of said hole (15) with the electronic module (4) to prevent said two layers from attaching to each other at least above or below the electronic module (4).

6. A method according to claim 5, **characterized in that**
said first separation layer (12) is arranged above the electronic module (4) to prevent attachment of layers above said electronic module (4), and
a second separation layer (13), slightly bigger than the hole (15), is arranged between the two layers (11, 12, 14) at the location of said hole (15) with the electronic module (4) to prevent attachment of layers below said electronic module (4).

7. The method according to claim 5 or 6, **characterized in that** at least one of said first and second separation layers (12, 13) is provided by printing.

8. The method according to one of claims 5 to 7, **characterized in that** said first, second and third layer (10, 11, 14) are made of polycarbonate.

9. The method according to one of claims 5 to 8, **characterized in that** at least one of said first and second separation layers (12, 13) is provided as a layer of printable ink.

10. The method according to one of claims 5 to 9, **characterized in that** said first, second and third layers (10, 11, 14) are attached to each other by laminating.

## Patentansprüche

1. Sicherheitsdokument (1), das Folgendes umfasst:
mindestens eine erste Schicht (10), eine zweite Schicht (11) und eine dritte Schicht (14), die miteinander verbunden sind, wobei mindestens eine dieser Schichten ein durchgängiges Loch (15) umfasst, und
ein elektronisches Modul (4), das im besagten Loch (15) angebracht ist, **dadurch gekennzeichnet, dass**
eine erste Trennschicht (12), die etwas größer als das Loch (15) ist, zwischen zwei dieser Schichten (10, 11, 14) an der Stelle des Loches (15) mit dem elektronischen Modul (4) angebracht ist, um die Verbindung der beiden Schichten zumindest über oder unter dem elektronischen Modul (4) zu verhindern.

2. Sicherheitsdokument nach Anspruch 1, **dadurch gekennzeichnet, dass** sich die erste Trennschicht (12) über dem elektronischen Modul (4) befindet und eine zweite Trennschicht (13), die etwas größer als das Loch (15) ist, zwischen zwei Schichten (10, 11, 14) an der Stelle des Loches (15) mit dem elektronischen Modul angebracht ist, um die Verbindung dieser Schichten unter dem elektronischen Modul (4) zu verhindern.

3. Sicherheitsdokument nach Anspruch 1 oder 2, **dadurch gekennzeichnet, dass** mindestens die erste oder die zweite Trennschicht (12, 13) eine Schicht aus Druckertinte ist.

4. Sicherheitsdokument nach einem der Ansprüche 1 oder 3, **dadurch gekennzeichnet, dass** die erste, zweite und dritte Schicht (10, 11, 14) aus Polykarbonat bestehen.

5. Verfahren zur Herstellung eines Sicherheitsdokuments (1), das mindestens Folgendes umfasst:
Bereitstellung einer ersten Schicht (10), einer zweiten Schicht (11) und einer dritten Schicht (14), wobei eine dieser Schichten (10, 11, 14) ein durchgängiges Loch (15) aufweist,
Anbringen eines elektronischen Moduls (4) im besagten Loch (15),
Verbindung der ersten Schicht (11), der zweiten Schicht (12) und der dritten Schicht (14) untereinander,
**dadurch gekennzeichnet, dass** die Methode vor der Verbindung dieser Schichten (10, 11, 14) Folgendes umfasst:
Bereitstellung einer ersten Trennschicht (12), die etwas größer als das Loch (15) ist, zwischen zwei der besagten Schichten (10, 11, 14) an der Stelle des Loches (15) mit dem elektronischen Modul (4), um die Verbindung der beiden Schichten miteinander zumindest über oder unter dem elektronischen Modul (4) zu verhindern.

6. Verfahren nach Anspruch 5, **dadurch gekennzeichnet, dass**
die erste Trennschicht (12) über dem elektronischen Modul (4) angebracht ist, um die Verbindung dieser Schichten über dem elektronischen Modul (4) zu verhindern, und
eine zweite Trennschicht (13), die etwas größer als das Loch (15) ist, zwischen zwei Schichten (11, 12, 14) an der Stelle des Loches (15) mit dem elektronischen Modul (4) angebracht ist, um die Verbindung dieser Schichten unter dem elektronischen Modul (4) zu verhindern.

7. Verfahren nach Anspruch 5 oder 6, **dadurch gekennzeichnet, dass** mindestens eine der ersten oder zweiten Trennschichten (12, 13) durch einen Druckvorgang bereitgestellt wird.

8. Verfahren nach einem der Ansprüche 5 bis 7, **dadurch gekennzeichnet, dass** die erste, zweite und dritte Schicht (10, 11, 14) aus Polykarbonat bestehen.

9. Verfahren nach einem der Ansprüche 5 bis 8, **dadurch gekennzeichnet, dass** mindestens eine der ersten oder zweiten Trennschichten (12, 13) als eine Schicht aus Druckertinte bereitgestellt wird.

10. Verfahren nach einem der Ansprüche 5 bis 9, **dadurch gekennzeichnet, dass** die erste, zweite und dritte Schicht (10, 11, 14) durch Laminieren miteinander verbunden sind.

## Revendications

1. Un document de sécurité (1) comprenant :
au moins une première couche (10), une deuxième couche (11) et une troisième couche (14) liées les unes aux autres, avec au moins une desdites couches comportant un orifice (15), et
un module électronique (4) placé dans ledit orifice (15), **caractérisé en ce que**
une première couche de séparation (12) légèrement plus grande que l'orifice (15) se trouve entre deux desdites couches (10, 11, 14) à l'emplacement dudit orifice (15) incluant le module électronique (4), pour empêcher que lesdites deux couches soient liées au moins au-dessus ou en dessous du module électronique (4).

2. Un document de sécurité selon la revendication 1, **caractérisé en ce que**
ladite première couche de séparation (12) se trouve au-dessus dudit module électronique (4), et
une deuxième couche de séparation (13) légèrement plus grande que l'orifice (15) se trouve entre deux desdites couches (10, 11, 14) à l'emplacement dudit orifice (15) incluant le module électronique, pour empêcher que lesdites deux couches soient liées sous ledit module électronique (4).

3. Un document de sécurité selon la revendication 1 ou 2, **caractérisé en ce qu'**au moins ladite première ou deuxième couche de séparation (12, 13) est une couche d'encre imprimable.

4. Un document de sécurité selon l'une des revendications 1 ou 3, **caractérisé en ce que** lesdites première, deuxième et troisième couches (10, 11, 14) sont en polycarbonate.

5. Un procédé de fabrication d'un document de sécurité (1) comprenant au moins :
la fourniture d'une première couche (10), d'une deuxième couche (11) et d'une troisième couche (14), avec une desdites couches (10, 11, 14) comportant un orifice (15),
le placement d'un module électronique (4) dans ledit orifice (15),
la liaison desdites première couche (11), deuxième couche (12) et troisième couche (14), les unes aux autres,
**caractérisé en ce qu'**avant de lier lesdites couches (10, 11, 14) les unes aux autres, ledit procédé comprend :
la fourniture d'une première couche de séparation (12) légèrement plus grande que l'orifice (15) entre deux desdites couches (10, 11, 14) à l'emplacement dudit orifice (15) incluant le module électronique (4), pour empêcher que lesdites deux couches soient liées au moins au-dessus ou en dessous du module électronique (4).

6. Un procédé selon la revendication 5, **caractérisé en ce que**
ladite première couche de séparation (12) se trouve au-dessus du module électronique (4) pour empêcher que les couches soient liées au-dessus dudit module électronique (4), et
une deuxième couche de séparation (13) légèrement plus grande que l'orifice (15) se trouve entre les deux couches (11, 12, 14) à l'emplacement dudit orifice (15) incluant le module électronique (4), pour empêcher que les couches soient liées sous ledit module électronique (4).

7. Le procédé selon la revendication 5 ou 6, **caractérisé en ce qu'**au moins une desdites première et deuxième couches de séparation (12, 13) est fournie par impression.

8. Le procédé selon l'une des revendications 5 à 7, **caractérisé en ce que** lesdites première, deuxième et troisième couches (10, 11, 14) sont en polycarbonate.

9. Le procédé selon l'une des revendications 5 à 8, **caractérisé en ce qu'**au moins une desdites première et deuxième couches de séparation (12, 13) est fournie en tant que couche d'encre imprimable.

10. Le procédé selon l'une des revendications 5 à 9, **caractérisé en ce que** lesdites première, deuxième et troisième couches (10, 11, 14) sont liées les unes aux autres par stratification.
